# EUROPÄISCHE PATENTSCHRIFT

(11) **EP 0 734 204 B1**
(45) Veröffentlichungstag und Bekanntmachung des Hinweises auf die Patenterteilung: **21.10.1998**
(21) Anmeldenummer: 95903325.9
(22) Anmeldetag: 07.12.1994
(51) Int. Cl.: A01N 25/26, A01N 43/84, A01N 43/653

(54) **UMHÜLLTE FESTE PFLANZENSCHUTZMITTELFORMULIERUNG**
SOLID ENVELOPED PLANT PROTECTION AGENT FORMULATION
FORMULATION SOLIDE D'AGENT PHYTOSANITAIRE ENROBEE

(30) Priorität: 17.12.1993 DE 4343176
(43) Veröffentlichungstag der Anmeldung: 02.10.1996
(73) Patentinhaber: BASF AKTIENGESELLSCHAFT, 67056 Ludwigshafen (DE)
(72) Erfinder: SAUR, Reinhold, 67459 Böhl-Iggelheim (DE); HORCHLER VON LOCQUENGHIEN, Klaus, 67117 Limburgerhof (DE); STADLER, Reinhold, 67489 Kirrweiler (DE); ZIEGLER, Hans, 67112 Mutterstadt (DE); JÄGER, Karl-Friedrich, 67117 Limburgerhof (DE); KOBER, Reiner, 67136 Fussgönheim (DE)
(86) Internationale Anmeldenummer: EP9404069
(87) Internationale Veröffentlichungsnummer: WO9516350

(56) Entgegenhaltungen:
- EP-A- 0 201 702
- EP-A- 0 230 844
- EP-A- 0 380 836
- WO-A-92/13012
- WO-A-92/17424
- FR-A- 2 382 195
- US-A- 4 343 790
- US-A- 4 756 844
- CHEMICAL ABSTRACTS, vol. 119, no. 17, 25. Oktober 1993, Columbus, Ohio, US; abstract no. 175770, A.FLOQUET ET AL. 'Epoxiconazole: a fungicide for cereals'

## Beschreibung

Die vorliegende Erfindung betrifft Mittel, enthaltend einen oder mehrere Pflanzenschutz-Wirkstoffe in einer Formulierung auf einem Träger und in Form eines Granulates oder als Pellets, welche mit einem Copolymerisatwachs umhüllt sind, welche aus Ethylen und einer α-olefinisch ungesättigten Mono- oder Dicarbonsäure mit 3 bis 8 C-Atomen hergestellt wurde, sowie ein Verfahren zu ihrer Herstellung und ferner, in den Fällen, in denen der Pflanzenschutz-Wirkstoff ein fungizider Wirkstoff ist, ein Verfahren zur Bekämpfung von Schadpilzen mit diesen Mitteln.

Es ist allgemein bekannt, Pflanzenschutz-Wirkstoffe mit Hüllpolymeren so auf einem festen Träger zu fixieren, daß der Wirkstoff nur allmählich freigesetzt wird und somit über einen langen Zeitraum seine Wirkung entfalten kann (sog. "slow-release-Formulierung"). WO-A-9217424 beschreibt mit einem ionisch und kovalent vernetzten Copolymer aus Ethylen und dem Zinksalz von Methacrylsäure umhüllte Düngerkörner. EP-A-0 380 836 offenbart die nicht kovalent vernetzten teilweise neutralisierten Äquivalente zu den in WO-A-9217424 beschriebenen Copolymeren als geeignet zur Umhüllung von landwirtschaftlichen Chemikalien, die langsam und kontrolliert freigesetzt werden sollen. In US-A-4 756 844 wird ein Verfahren zur Umhüllung kleiner Körner, die einen Wirkstoff enthalten, der ein Pflanzenschutzmittel sein kann, beschrieben. Die gängigen Produkte haben jedoch den Nachteil, daß sie noch stark zum Verkleben neigen, wodurch die formulierte Ware ihre Fließfähigkeit verliert. Nicht befriedigen kann auch der relativ hohe Gehalt an Polymer in der Formulierung.

Der vorliegenden Erfindung lag daher die Aufgabe zugrunde, eine Formulierung für Pflanzenschutzwirkstoffe zu finden, welche diese nachteiligen Eigenschaften nicht aufweist.

Demgemäß wurden Mittel gefunden, welche einen oder mehrere Pflanzenschutz-Wirkstoffe in einer Formulierung auf einem Träger und in Form eines Granulates oder als Pellets enthalten und welche mit einem Copolymerisatwachs umhüllt sind, das aus Ethylen und einer α-olefinisch ungesättigten Mono- oder Dicarbonsäure mit 3 bis 8 C-Atomen hergestellt wurde, sowie ein Verfahren zu ihrer Herstellung und ferner, in den Fällen, in denen der Pflanzenschutz-Wirkstoff ein fungizider Wirkstoff ist, ein Verfahren zur Bekämpfung von Schadpilzen mit diesen Mitteln.

Ferner wurde ein Verfahren zu ihrer Herstellung und die Verwendung jener Mittel, welche einen fungiziden Pflanzenschutz-Wirkstoff enthalten, zur Bekämpfung von Schadpilzen gefunden.

Als Pflanzenschutz-Wirkstoffe kommen herbizide, wachstumsregulatorische, insektizide und insbesondere fungizide Wirkstoffe in Betracht.

Als fungizide Pflanzenschutz-Wirkstoffe eignen sich: Tridemorph (2,6-Dimethyl-4-tridecylmorpholin), Fenpropimorph (4-(2-Methyl-3-[4-tert.-butylphenyl]propyl)-2,6-dimethylmorpholin), insbesondere dessen Isomeres, bei dem die Methylgruppen am Morpholinring cis zueinander stehen, Fenpropidin (N-[3-(4-tert.-Butylphenyl)-2-methylpropylpiperidin).

Die Komponente Fenpropimorph kann in zwei stereoisomeren Formen (Morpholinring) vorliegen, wobei das cis-Isomere bevorzugt wird. Die Erfindung umfaßt Mittel, die die reinen Isomeren der Verbindung Fenpropimorph enthalten, insbesondere das cis-Isomere, und Mittel, die Gemische der Isomere enthalten.

Weiterhin kommen als fungizide Pflanzenschutz-Wirkstoffe in Betracht:
(+)-cis-1-(4-Chlorphenyl)-2-(1H-1,2,4-triazol-1-yl)cycloheptanol, Metsulfovax, Cyprodinil, Methyl-(E)-2-{2-[6-(2-cyanophenoxy)pyrimidin-4-yloxy]phenyl}-3-methoxyacrylat und die Azol-Wirkstoffe N-propyl-N-[2,4,6-trichlorophenoxy)ethyl]imidazol-1-carboxamid (Prochloraz), (Z)-2-(1,2,4,-Triazol-1-yl-methyl)-2-(4-fluorphenyl)-3-(2-chlorphenyl)-oxiran (Epoxiconazol) der Formel 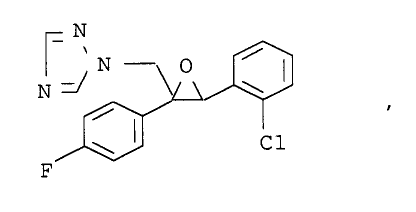
1-Butyl-1-(2,4-dichlorphenyl)-2-(1,2,4-triazol-1-yl)-ethanol (Hexaconazol), 1-[(2-Chlorphenyl)methyl]-1-(1,1-dimethyl)-2-(1,2,4-triazol-1-yl-ethanol, 1-(4-Fluorphenyl)-1-(2-fluorphenyl)-2-(1,2,4-triazol-1-yl)ethanol (Flutriafol),
(RS)-4-(4-Chlorphenyl)-2-phenyl-2-(1H-1,2,4-triazol-1-yl-methyl)-butyronitril, 1-[(2 RS, 4 RS; 2 RS, 4 SR)-4-Brom-2-(2,4-dichlorphenyl)-tetrahydrofurfuryl]-1H-1,2,4-triazol,
3-(2,4-Dichlorphenyl)-2-(1H-1,2,4-triazol-1-yl)-quinazolin-4-(3H)-on, (RS)-2,2-Dimethyl-3-(2-chlorbenzyl)-4-(1H-1,2,4-triazol-1-yl)-butan-3-ol, Bitertanol, Triadimefon, Triadimenol, Bromuconazol, Cyproconazol, Dichlobutrazol, Difenoconazol, Diniconazol, Etaconazol, Fluquinconazol, Imibenconazol, Propiconazol, Flusilazol, Tebuconazol, Imazalil, Penconazol, Tetraconazol, Triflumizol, Metconazol, Fluquinconazol, Fenbuconazol, Triticonazol.

Vorzugsweise entstammten die fungizide Pflanzenschutz-Wirkstoffe der Gruppe: Tridemorph, Fenpropimorph, Fenpropidin, Azol-Wirkstoff, wobei aus der Gruppe Tridemorph, Fenpropimorph und Fenpropidin ein oder mehrere Wirkstoffe in den Mitteln vorliegen können.

Bevorzugt werden aus den Azol-Wirkstoffen: Prochloraz, Epoxiconazol, Hexaconazol, Cyproconazol, Difenoconazol, Propiconazol, Flusilazol, Diniconazol, Triticonazol und Tebuconazol, wobei Epoxiconazol mit besonderem Vorteil verwendet wird.

Die Pflanzenschutz-Wirkstoffe können auch in Form ihrer Salze oder Metallkomplexe vorliegen. Auch die so erhaltenen Mittel werden von der Erfindung umfaßt.

Die Salze werden hergestellt durch Umsetzung mit Säuren, z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalindisulfonsäure.

Metallkomplexe können wahlweise nur einen, oder auch mehrere Pflanzenschutz-Wirkstoffe enthalten. Es lassen sich auch Metallkomplexe herstellen, die diese Wirkstoffe miteinander in einem gemischten Komplex enthalten.

Metallkomplexe werden hergestellt aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Metalle der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink. Bevorzugt sind die Nebengruppen-Elemente der 4. Periode und insbesondere Kupfer. Die Metalle können dabei in den verschiedenen ihnen zukommenden Wertigkeiten vorliegen. Die Metallkomplexe können einen oder mehrere organische Molekülanteile als Liganden enthalten.

Die Bekämpfung von Schadpilzen mit den fungiziden Mitteln erfolgt zweckmäßig in der Weise, daß man eine fungizid wirksame Menge des fungiziden Mittels in oder auf dem Ackerboden auf das im Ackerboden ausgebrachte Saatgut oder auf die sich daraus entwickelnden Pflanzen bzw. auf Sämlinge einwirken läßt.

Durch die verzögerte Freisetzung der Wirkstoffe kann die Freisetzungsrate der Wirkstoffe im Boden so gesteuert werden, daß etwa im Falle der fungiziden Pflanzenschutz-Wirkstoffe ein wirksamer Schutz vor Pilzkrankheiten über die gesamte Vegetationsperiode hinweg aufrechterhalten werden kann. Die Wirkstoffaufnahme erfolgt kontinuierlich über die Wurzeln in dem Maße der kontrollierten Freisetzung der Wirkstoffe aus den erfindungsgemäß formulierten Wirkstoffen, und die Wirkstoffe werden dann über die Wurzeln systemisch in den Pflanzen verteilt.

Gegenüber der zur Pilzbekämpfung verbreiteten Spritzapplikation der Pflanzenschutz-Wirkstoffe bietet das erfindungsgemäße Verfahren die folgenden Vorteile:
- Mit einer einzigen Ausbringung der erfindungsgemäß formulierten Wirkstoffe im Ackerboden, die vorteilhaft zusammen mit dem Saatgut bzw. mit der Einpflanzung von Sämlingen erfolgt, kann ein wirksamer Schutz der Pflanze etwa gegen Pilzkrankheiten über die gesamte Vegetationsperiode erzielt werden.
- Hierdurch entfällt die bisher übliche Anwendung von mehreren Spritzapplikationen in der wachsenden Kultur, wodurch ein erheblicher Arbeitsaufwand eingespart werden kann.
- Durch die Applikation der Pflanzenschutz-Wirkstoffe in Form der erfindungsgemäßen Formulierung ergeben sich geringere Mengen an den auszubringenden Wirkstoffen.
- Bei Anwendung des erfindungsgemäßen Verfahrens kann eine Saatgutbeizung entfallen.

Es ist ein wesentliches Merkmal der vorliegenden Erfindung, daß die Pflanzenschutz-Wirkstoffe in einer Formulierung mit verzögerter Wirkstoff-Freisetzung vorliegen. Durch eine solche kontrollierte Wirkstoff-Freisetzung ist es möglich, mit einer Ausbringung der erfindungsgemäßen fungiziden Mittel im Boden einen wirksamen Schutz der Kulturpflanzen gegen Pilzbefall über die gesamte Vegetationsperiode hinweg aufrechtzuerhalten.

Die Granulate werden als Umhüllungsgranulate hergestellt, indem die Wirkstoffe zunächst auf feste granulatförmige Trägerstoffe aufgetragen werden. Die erhaltenen wirkstoffhaltigen Granulate werden anschließend mit geeigneten Hüllsubstanzen umhüllt, die eine verzögerte kontrollierte Wirkstoff-Freigabe bewirken.

Geeignete feste Trägerstoffe für die Umhüllungsgranulate sind beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel wie Ammoniumsulfat, Ammoniumphosphat, Ammoniumnitrat, Harnstoffe, z.B. Crotonylidendiharnstoff, Isobutylidendiharnstoff und pflanzliche Produkte wie Getreidemehl, Maismehl, Baumrinden-, Holz- und Nußschalenmehl, Maisschrot, Cellulosepulver. Vorteilhaft werden Düngemittel als Trägerstoffe verwendet. Bevorzugt sind Düngemittelgranulate oder -pellets als Trägerstoff, und zwar insbesondere solche, die Phosphat enthalten.

Die Granulate weisen im allgemeinen einen Kornbereich von 0,1 bis 10 mm, vorzugsweise 0,5 bis 8 mm, insbesondere 1 bis 6 mm auf.

Das Aufbringen der Wirkstoffe auf die Trägerstoffe erfolgt in der Regel so, daß man sie in Form von Öl-in-Wasser-Emulsionen, Emulsionskonzentraten, Suspoemulsionen, Suspensionskonzentraten oder in organischen Lösungsmitteln oder vorzugsweise in Wasser gelöst aufsprüht.

Bei den Wirkstoffen Tridemorph, Fenpropimorph und Fenpropidin ist die Verwendung von Öl-in-Wasser-Emulsionen, Emulsionskonzentraten oder der genannten Lösungen bevorzugt.

Das Aufsprühen erfolgt z.B. in Wirbelbettapparaturen oder in Trommeln oder Drehtellern, in denen das Trägergranulat gerollt wird, in perforierten Kesseln mit kontrollierter Führung des Trocknungsmediums, zweckmäßig Luft, oder im Luftsuspensionsverfahren. Im allgemeinen werden für das Aufsprühen und das Trocknen Temperaturen zwischen 10°C und 110°C angewendet.

Der den aufgetragenen Wirkstoff enthaltende Trägerstoff wird anschließend mit geeigneten Hüllstoffen umhüllt. Als Hüllstoffe für die kontrollierte Wirkstoff-Freisetzung aus den Umhüllungsgranulaten werden wäßrige Wachsdispersionen eingesetzt, enthaltend, bezogen auf die wäßrige Wachsdispersion, 5 bis 40 Gew.-% eines Ethylencopolymerisatwachses, bestehend aus 10 bis 25 Gew.-% einer α-olefinisch ungesättigten Mono- oder Dicarbonsäure mit 3 bis 8 C-Atomen und 90 bis 75 Gew.-% Ethylen mit einem MFI-Wert, gemessen bei 190°C und 2,16 kp Belastung, von 1 bis 600, bevorzugt 5 bis 500, insbesondere 15 bis 300 oder einem MFI-Wert, gemessen bei 160°C und 325 p, von 1 bis 600, 0,1 bis 5 Gew.-% Alkalihydroxid, Ammoniak, ein Alkanolamin oder ein Dialkanolamin und ihre Mischungen und als Rest Wasser zu 100 %.

Die für die Wachsdispersionen zu verwendenden Copolymerisate des Ethylens enthalten 10 bis 25, bevorzugt 15 bis 24 Gew.-% α-olefinisch ungesättigte Mono- oder Dicarbonsäuren mit 3 bis 8 C-Atomen, von denen beispielsweise Acrylsäure, Methacrylsäure, Crotonsäure, Maleinsäure, Fumarsäure und Itaconsäure genannt seien. Davon sind Methacrylsäure und insbesondere Acrylsäure und ihre Mischungen bevorzugt.

Die Ethylen-Copolymerisatwachse sind erfindungsgemäß charakterisiert durch einen speziellen MFI (Melt Flow Index) oder Schmelzindex. Der MFI gibt die Menge der Polymerisatschmelze in Gramm an, die bei einer bestimmten Temperatur durch eine Düse von bestimmten Abmessungen bei einem bestimmten Kraftaufwand (Belastung) gedrückt werden kann. Die Bestimmung der Schmelzindices (MFI-Einheiten) erfolgt nach folgenden Normvorschriften, ASTM D 1238-65 T, ISO R 1133-1696 (E) oder DIN 53 735 (1970), die untereinander identisch sind.

Weiterhin enthalten die Wachsdispersionen meist Basen, und zwar in der Regel 0,1 bis 5, bevorzugt 1 bis 3 Gew.-% Alkalihydroxid, bevorzugt Kaliumhydroxid oder Natriumhydroxid, Ammoniak, ein Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder ein Dialkyl-monoalkanolamin mit jeweils 2 bis 8 C-Atomen im Alkyl- und Hydroxyalkylrest oder ihre Mischungen. Als Amine seien beispielsweise genannt Diethanolamin, Triethanolamin, 2-Amino-2-methylpropanol-(1) oder Dimethylethanolamin. Vorzugsweise wird Ammoniak verwendet.

Durch den Baseanteil in den Wachsdispersionen liegen die Carbonsäuregruppen in den Copolymerisatwachsen zumindest teilweise in der Salzform vor. Vorzugsweise sind diese Gruppen zu 50 bis 90 und vor allem zu 60 bis 85 % neutralisiert.

Die Hüllschicht kann zusätzliche Substanzen zur Steuerung der Freisetzung der Wirkstoffe enthalten. Dies sind z.B. wasserlösliche Substanzen wie Polyethylenglykole, Polyvinylpyrrolidon, Copolymerisate aus Polyvinylpyrrolidon und Polyvinylacetat. Deren Menge beträgt beispielsweise 0,1 bis 5 Gew.-%, vorzugsweise 0,1 bis 3 Gew.-%, bezogen auf die Hüllsubstanz.

Das Aufbringen der Hüllschicht erfolgt zweckmäßig durch Aufsprühen von Lösungen, Dispersionen oder Dispersion der genannten Hüllsubstanzen in organischen Lösungsmitteln oder Wasser. Vorzugsweise verwendet man eine wäßrige Suspension oder eine Emulsion des Hüllstoffs, welche insbesondere einen Gehalt an Polymersubstanz von 0,1 bis 50 und vor allem von 1 bis 35 Gew.-% aufweisen. Dabei können noch weitere Hilfsstoffe zur Optimierung der Verarbeitbarkeit zugesetzt sein, z.B. oberflächenaktive Substanzen, Feststoffe wie Talkum und/oder Magnesiumstearat.

Besonders bevorzugt ist eine Wachsdispersion, welche 5 bis 40 Gew.-% eines Ethylen-Copolymerisatwachses, 0,1 bis 5 Gew.-% Ammoniak und 55 bis 94,9 Gew.-% Wasser enthält bzw. aus diesen Komponenten besteht, wobei das Ethylen-Copolymerisatwachs aus 75 bis 90 Gew.-% Ethyleneinheiten und zu 10 bis 25 Gew.-% aus Einheiten einer α-olefinisch ungesättigten Mono- oder Dicarbonsäure mit 3 bis 8 C-Atomen aufgebaut ist.

Die erfindungsgemäß verwendeten Hüllpolymere sind allgemein bekannt oder nach bekannten Methoden erhältlich (vgl. z.B. EP 166 235; EP-A 201 702; US-A 5 206 279).

Das Aufsprühen erfolgt zum Beispiel in Wirbelbettapparaturen oder in Trommeln oder Drehtellern, in denen das Trägergranulat gerollt wird, in perforierten Kesseln mit kontrollierter Führung des Trocknungsmediums oder im Luftsuspensionsverfahren. Im allgemeinen wird bei Temperaturen zwischen 10°C und 110°C gearbeitet.

Die so erhaltenen und mit der Hüllschicht versehenen fungiziden Mittel können als solche für die erfindungsgemäße Bekämpfung von Pilzen unter kontrollierter Wirkstoff-Freigabe verwendet werden.

Es kann jedoch auch vorteilhaft sein, auf diese Mittel von außen zusätzlich Wirkstoff aufzutragen. Die so erhaltenen Mittel ermöglichen eine weitere Abstufung der kontollierten Wirkstoff-Freigabe, wobei die außen auf der Hüllschicht aufgetragenen Wirkstoffe für eine gezieltere Anfangswirkung von Bedeutung sind. Es kann zusätzlich von Vorteil sein, noch eine zweite Hüllschicht zu verwenden, wodurch sich für die verzögerte Freisetzung der Wirkstoffe eine weitere Steuerungsmöglichkeit ergibt.

Neben der vorstehend beschriebenen Umhüllungstechnik besteht eine weitere vorteilhafte Technik zur Herstellung der erfindungsgemäßen Mittel in einer Formulierung mit verzögerter Wirkstoff-Freisetzung darin, daß die Wirkstoffe in geeignete Matrixsubstanzen eingelagert werden, aus denen die Wirkstoffe verzögert und kontrolliert freigesetzt werden. Als Matrix kann hierbei beispielsweise das für die Umhüllung eingesetzte Material verwendet werden. Die Herstellung erfolgt dabei zweckmäßigerweise derart, daß die Wirkstoffe in der Lösung oder Dispersion des Hüllmaterials gelöst oder dispergiert werden und anschließend diese Zubereitung, wie vorstehend für die Hüllstoffe beschrieben, auf das Trägermaterial aufgebracht wird. Hierdurch wird sichergestellt, daß die Wirkstoffe gleichmäßig in der Hüllschicht verteilt werden. In der Regel ist die Freisetzung aus diesen Formulierungen diffusionskontrolliert.

Die fungiziden Mittel beispielsweise enthalten im allgemeinen zwischen 0,01 und 95, vorzugsweise 0,05 bis 90 Gew.-% Pflanzenschutz-Wirkstoff.

Die Aufwandmengen liegen je nach Art des gewünschten Effektes zwischen 0,02 und 5 kg, vorzugsweise 0,05 und 3 kg Pflanzenschutz-Wirkstoff pro ha. Dabei beträgt das Verhältnis der Wirkstoffe in einer fungiziden Zweier-Mischung im allgemeinen 50:1 bis 1:10, vorzugsweise 20:1 bis 1:5, insbesondere 10:1 bis 1:2.

Die fungiziden Mittel zeichnen sich durch eine hervorragende Wirksamkeit gegen ein breites Spektrum von pflanzenpathogenen Pilzen, insbesondere aus der Klasse der Ascomyceten und Basidiomyceten, aus.

Besondere Bedeutung haben sie für die Bekämpfung einer Vielzahl von Pilzen an verschiedenen Kulturpflanzen wie Getreide, z.B. Weizen, Roggen, Gerste, Hafer, Reis, Raps, Zuckerrüben, Mais, Soja, Kaffee, Zuckerrohr, Zierpflanzen und Gemüsepflanzen wie Gurken, Bohnen und Kürbisgewächsen. Mit besonderem Vorteil werden die erfindungsgemäß hergestellten Fungizide zur Pilzbekämpfung an Getreide verwendet.

Die Anwendung der Mittel erfolgt zweckmäßig in der Weise, daß man das Mittel im oder auf dem Boden auf das im Boden ausgebrachte Saatgut oder auf sich daraus entwickelnden Pflanzen bzw. auf Sämlinge einwirken läßt. Das Ausbringen des Mittels und das Ausbringen des Saatguts bzw. das Einpflanzen der Sämlinge kann in getrennten Arbeitsgängen erfolgen, wobei das Ausbringen des Mittels vor oder nach dem Ausbringen des Saatguts bzw. dem Einpflanzen der Sämlinge erfolgen kann.

Es ist besonders vorteilhaft, die formulierten Pflanzenschutz-Wirkstoffe zusammen mit dem Saatgut bzw. dem Einpflanzen der Sämlinge auszubringen.

Die nachfolgenden Beispiele veranschaulichen die Erfindung.

### A. Beispiele für erfindungsgemäße Formulierungen

α) Der Wirkstoff Epoxiconazol wurde in Form eines Suspensionskonzentrates folgender Zusammensetzung verarbeitet: 500 g/l Epoxiconazol,
   - 30 g/l: eines Blockpolymerisats mit Polypropylenoxidkern der ungefähren Molmasse 3250, auf den bis zu einem Molekulargewicht von ungefähr 6500 Ethylenoxid aufgepropft ist als Dispergiermittel (Fa. BASF, Deutschland),
   - 20 g/l: eines Natriumsalzes eines Kondensationsproduktes aus Phenolsulfonsäure, Harnstoff und Formaldehyd als Dispergiermittel (Fa. BASF, Deutschland) und die Differenz zu 1 l Wasser. Die in den folgenden Beispielen verwendeten flüssigen Zubereitungen des Epoxiconazol wurden durch Verdünnen dieses Suspensionskonzentrates mit der entsprechenden Menge Wasser erhalten.
β) Der Wirkstoff Fenpropimorph wurde als Öl-in-Wasser-Emulsion folgender Zusammensetzung verarbeitet:
   - 200 g/l: Fenpropimorph,
   - 37 g/l: eines mit 8 Ethylenoxideinheiten veretherten p-Isononylphenols als Emulgator (Fa. BASF, Deutschland),
   - 87,5 g/l: eines 1:1-Gemisches (Gewicht) aus 2-Ethylhexansäure und einem mit 7 Ethylenoxideinheiten veretherten p-Isononylphenol als Emulgator (Fa. BASF, Deutschland) und
   die Differenz zu 1 l Wasser.

### Beispiel 1

### a) Aufbringung von Epoxiconazol auf NP-Dünger

Auf 4 kg eines Stickstoff-Phosphat-Düngers (Nitrophoska®-Dünger 20-20-0, BASF) mit der Korngröße im Bereich von 2-3,5 mm und einem Schüttgewicht von 1050 g/l wurden in einem Wirbelschichtbeschichtungsapparat (Aeromatic-Coater MP 1) einer Lösung von 3,0 g Epoxiconazol, hergestellt gemäß (α), aufgedüst, und die nach dem Aufdüsen erhaltenen Düngerpartikel wurden anschließend getrocknet. Die Zulufttemperatur zum Wirbelschichtbeschichtungsapparat betrug beim Sprühvorgang und bei der Tocknung 39°C.

### b) Aufbringung der Hüllsubstanz

Als Hüllsubstanz wurde eine Wachsdispersion mit einem Gehalt von 27 Gew.-% eines Ethylen-Acrylsäure-Copolymerisats aus 20 Gew.-% Acrylsäure und 80 Gew.-% Ethylen, 3,68 Gew.-% Ammoniaklösung (25 gew.-%ig), 0,20 Gew.-% Na₂S₂O₅ und 69,10 Gew.-% Wasser verwendet. Eine Mischung von 740 g dieser Wachsdispersion und 100 ml Wasser wurde in einem Wirbelschichtbeschichtungsapparat auf 3,8 kg des gemäß vorstehender Ziffer a) mit Epoxiconazol beaufschlagten, auf 40°C erwärmten Dünger-Granulats unter Zuführung von Luft von 39 bis 42°C über einen Zeitraum von 70 min aufgedüst. Anschließend wurde noch 10 min unter weiterer Zufuhr von Luft von 39 bis 42°C nachgetrocknet. Der Anteil der Hüllschicht an dem nach der Trocknung erhaltenen umhüllten Düngergranulat betrug 5 Gew.-%, bezogen auf das umhüllte Düngergranulat.

### Beispiel 2

Man verfuhr wie in Beispiel 1b) beschrieben, wobei jedoch als Hüllsubstanz 4,89 kg der Wachsdispersion auf 12 kg des gemäß Beispiel 1a) mit Epoxiconazol beaufschlagten Düngergranulats bei einer Zuluft- und Ablufttemperatur im Bereich von 45 - 48°C aufgesprüht wurden, wobei die Gesamtzeit für das Aufsprühen und Nachtrocknung 175 min betrug. Der Gehalt der Hüllschicht, bezogen auf das nach der Trocknung erhaltene umhüllte Düngergranulat, betrug 10 Gew.-%.

### Beispiel 3

Man verfuhr wie in Beispiel 1b) beschrieben, wobei jedoch bei einer Zuluft- und Ablufttemperatur von 44 - 45°C die dreifache Menge der Wachsdispersion aufgesprüht wurde, wobei die Gesamtzeit für das Aufsprühen und die Nachtrocknung 200 min betrug. Der Gehalt der Hüllschicht, bezogen auf das nach der Trocknung erhaltene umhüllte Düngergranulat, betrug 15 Gew.-%.

### Beispiel 4

### a) Aufbringung von Fenpropimorph auf NP-Dünger

Auf 4 kg eines Stickstoff -Phosphat-Düngers (Nitrophoska®-Dünger 20-20-0, BASF) mit der Korngröße im Bereich von 2 - 3,5 mm wurden in einem Wirbelschichtbeschichtungsapparat (Aeromatic-Coater MP 1) 20 g Fenpropimorph (gemäß (β), s.o.) innerhalb von ca. 11 min bei einer Zulufttemperatur von 60°C aufgedüst.

### b) Aufbringung der Hüllsubstanz

Als Hüllsubstanz wurde eine Wachsdispersion mit einem Gehalt von 27 Gew.-% eines Ethylen-Acrylsäure-Copolymerisats aus 20 Gew.-% Acrylsäure und 80 Gew.-% Ethylen, 3,68 Gew.-% Ammoniaklösung (25 gew.-%ig), 0,20 Gew.-% Na₂S₂O₅ und 69,10 Gew.-% Wasser verwendet. Eine Mischung von 713 g dieser Wachsdispersion und 96 ml Wasser wurde in einem Wirbelschichtbeschichtungsapparat auf 3,8 kg des gemäß vorstehender Ziffer a) mit Fenpropimorph (gemäß (β), so.) beaufschlagten, auf 45°C erwärmten Dünger-Granulats unter Zuführung von Luft von 40 bis 42°C über einen Zeitraum von 62 min aufgedüst. Anschließend wurde noch 5 min unter weiterer Zufuhr von Luft von 40 bis 42°C nachgetrocknet. Der Anteil der Hüllschicht an dem nach der Trocknung erhaltenen umhüllten Düngergranulats betrug ca. 5 Gew.-%, bezogen auf das umhüllte Düngergranulat.

### Beispiel 5

Man verfuhr wie in Beispiel 4b) beschrieben, wobei jedoch als Hüllsubstanz 1,428 kg der Wachsdispersion auf 3,4 kg des gemäß Beispiel 4a) mit Fenpropimorph beaufschlagten Düngergranulats bei einer Zuluft- und Ablufttemperatur im Bereich von 44 - 45°C aufgesprüht wurden, wobei die Gesamtzeit für das Aufsprühen und Nachtrocknung 125 min betrug. Der Gehalt der Hüllschicht, bezogen auf das nach der Trocknung erhaltene umhüllte Düngergranulat, betrug ca. 10 Gew.-%.

### Beispiel 6

Man verfuhr wie in Beispiel 4b) beschrieben, wobei jedoch bei einer Zuluft- und Ablufttemperatur von 44 - 45°C 2,142 kg der Wachsdispersion auf 3,4 kg des gemäß Beispiel 4a) mit Fenpropimorph beaufschlagten Düngergranulats aufgesprüht wurden, wobei die Gesamtzeit für das Aufsprühen und die Nachtrocknung 190 min betrug. Der Gehalt der Hüllschicht, bezogen auf das nach der Trocknung erhaltene umhüllte Düngergranulat, betrug 15 Gew.-%.

### Beispiel 7

Entsprechend den Beispielen 1a) und 4a) wurden auf 3,8 kg NP 20-20-0 Düngergranulat gleichzeitig zwei Wirkstofflösungen durch zwei separate Düsen aufgebracht. Die eine Lösung enthielt 2,5 g Epoxiconazol (gemäß (α), s.o.) und die andere eine Öl-in-Wasser-Emulsion von 15 g Fenpropimorph. Nach der Trocknung wurde das derart behandelte Granulat entsprechend dem Besprühen 1b) bzw. 4b) mit 740 g der dort beschriebenen Wachsdispersion beaufschlagt, wobei die Zulufttemperatur 45°C und die gesamte Zeit für das Aufbringen 62 min betrug.

### Beispiel 8

In 740 g der in Beispiel 1b) beschriebenen Wachsdispersion wurden 15 g Fenpropimorph als solches eingerührt und gleichmäßig verteilt. Mit dieser Zubereitung wurden 3,8 kg NP 20-20-0 Düngergranulat wie unter Bsp. 1b) beaufschlagt (45°C Zulufttemperatur, 52 min Aufbringzeit).

### Beispiel 9

Man verfuhr wie unter Beispiel 8, nur wurden anstelle von 15 g Fenpropimorph als solches 2,5 g Epoxiconazol (gemäß (α), s.o.) eingerührt.

### Beispiel 10

Man verfuhr wie unter Beispiel 8, nur wurden zusätzlich zu den 15 g Fenpropimorph als solches noch 2,5 g Epoxiconazol (gemäß (α), s.o.)in die Wachsdispersion eingerührt.

### Beispiel 11

Entsprechend Beispiel 7 wurden zunächst auf 3,8 kg NP 20-20-0 Dünger Lösungen von 7,5 g Fenpropimorph (gemäß (β), s.o.) und von 1,25 g Epoxiconazol (gemäß (α). s.o.) in 38,75 Wasser durch zwei separate Düsen aufgebracht und getrocknet. Anschließend wurde eine Mischung aus 740 g der in Beispiel 1b) beschriebenen Wachsdispersion, 5 g Fenpropimorph (gemäß (β), s.o.) und 0,83 g Epoxiconazol (gemäß (α), s.o.) als Hülle aufgebracht und getrocknet (Zeit: 55 min, Temp.: 50°C Zuluft). Zum Schluß wurden außen auf die Hülle nochmals Lösungen von 2,5 g Fenpropimorph (gemäß (β), s.o.) in 10,8 g Wasser und 0,42 g Epoxiconazol (gemäß (α), s.o.) aufgebracht. Das fertige Produkt enthält 5 Gew.-% Hüllmaterial und von den Wirkstoffen ist die Hälfte unter der Hülle, ein Drittel in der Hüllmatrix und ein Sechstel außen auf der Hülle verteilt.

### Beispiel 12

Das Beispiel wurde entsprechend Beispiel 11 durchgeführt. Allerdings wurden die einzelnen Aufwandmengen der Wirkstoffe derart variiert, daß sich deren Verteilung im Fertigprodukt in der Weise änderte, daß ein Drittel der Wirkstoffe unter die Hülle appliziert und zwei Drittel in das Hüllmaterial eingebettet wurde.

### B. Anwendungsbeispiel

Prüfung der Fungizidgranulate mit verzögerter Wirkstoff-Freisetzung zur Bekämpfung von samen- und luftbürtigen Schadpilzen an Getreide

Fungizidgranulate mit verzögerter Wirkstoff-Freisetzung wurden mit Winterweizensaatgut der Sorte "Rektor" so gemischt, daß bei gleichzeitiger Aussaat von 200 kg/ha Flug- und Steinbrand infiziertem Weizen und 100 kg/ha der erfindungsgemäßen Fungizidgranulate mit einer Sämaschine in die gleiche Drillreihe ausgebracht wurden. Die Wirkstoffmengen betrugen je ha 300 g Fenpropimorph oder 50 g Epoxiconazol bzw. bei Kombination beider Wirkstoffe 125 g Fenpropimorph und 25 g Epoxiconazol (Anwendungsbeispiel). Zur Vollreife des Weizens (Entwicklungsstadium 89) wurden die mit Flugbrand (Ustilago tritici) und Steinbrand (Tilletia caries) befallenen Weizenähren ausgezählt und die Effektivität der Fungizidgranulate in Wirkungsgrade nach Abbott umgerechnet (0 = ohne Wirkung, 100 = Schadpilz vollständig bekämpft). Die Ergebnisse sind im Anwendungsbeispiel dargestellt.

### Anwendungsbeispiel

Bekämpfung von samenbürtigem Flugbrand (Ustilago tritici) und Steinbrand (Tilletia caries) an Weizen im Freiland mit Umhüllungsgranulaten auf der Basis eines Stickstoff-Phosphat-Düngers (NP-Dünger) und den fungiziden Wirkstoffen Fenpropimorph und Epoxiconazol durch Wurzelaufnahme

| Behandlung | Art der Granulate | Fungizide Wirkstoffaufwandmenge g/ha | Bekämpfung der Brandkrankeiten Wirkungsgrad nach Abbott 0 - 100 | |
|---|---|---|---|---|
| | | | Erfassungstermin Ustilago tritici | Vollreife der Gerste Tilletia caries |
| Kontrolle ohne Granulate | - | - | 0 | 0 |
| NP-Dünger | ohne Umhüllung | - | 0 | 0 |
| NP-Dünger | Wachsdispersionshülle gem. Bsp. 1b) | - | 0 | 0 |
| NP-Dünger | Wachsdispersionshülle + Fenpropimorph | 300 | 90 | 66 |
| NP-Dünger | Wachsdispersionshülle + Epoxiconazol | 50 | 100 | 100 |
| NP-Dünger | Wachsdisperionshülle + Epoxiconazol | 125 | | |
| | + Fenpropimorph | 25 | 100 | 100 |

Die Ergebnisse zeigen, daß Fenpropimorph und Epoxiconazol in Form von slow release Granulaten ausgebracht, über die Pflanzenwurzeln aufgenommen, Wirkungsgrade von 66 - 100 erzielten und somit als gutes bis sehr gutes Bekämpfungsverfahren bezeichnet werden können.

## Patentansprüche

1. Mittel, aufgebaut im wesentlichen aus einem granulat- oder pelletförmigen, mit einem oder mehreren Pflanzenschutz-Wirkstoffen beaufschlagten Träger und einer Umhüllung, die ihrerseits im wesentlichen aus einem Copolymerisatwachs besteht, welches aufgebaut ist aus 75 bis 90 Gew.-% Ethylen und 10 bis 25 Gew.-% einer α-olefinisch ungesättigten Mono- oder Dicarbonsäure mit 3 bis 8 Kohlenstoffatomen, wobei das Copolymerisatwachs einen MFI-Wert von 1 bis 600 hat, gemessen bei 160 °C und 325 p oder 190°C und 2,16 kp Belastung, und die Mono- oder- Dicarbonsäure ganz oder teilweise in Form von Salzen mit Alkalimetallionen, Ammoniumionen oder gleichen oder verschiedenen Alkanolammoniumionen als Kationen vorliegen kann.

2. Mittel nach Anspruch 1, dadurch gekennzeichnet, daß es als Pflanzenschutz-Wirkstoffe fungizide Pflanzenschutz-Wirkstoffe enthält.

3. Mittel nach Anspruch 2, dadurch gekennzeichnet, daß es sich bei den fungiziden Pflanzenschutz-Wirkstoffen um Tridemorph und/oder Fenpropimorph und/oder Fenpropidin sowie einen weiteren fungiziden Pflanzenschutz-Wirkstoff handelt.

4. Mittel nach Anspruch 3, dadurch gekennzeichnet, daß es sich bei dem weiteren Pflanzenschutz-Wirkstoff um einen Azol-Wirkstoff handelt.

5. Mittel nach Anspruch 4, dadurch gekennzeichnet, daß der Azol-Wirkstoff ausgewählt ist aus der folgenden Gruppe: Prochloraz, Epoxiconazol, Hexaconazol, Cyproconazol, Difenoconazol, Propiconazol, Flusilazol, Tebuconazol, Diniconazol, Triticonazol.

6. Mittel nach den Ansprüchen 1 bis 5, dadurch gekennzeichnet, daß der granulat- oder pelletförmige Träger ein Düngemittel ist.

7. Mittel nach Anspruch 6, dadurch gekennzeichnet, daß das Düngemittel Phosphat enthält.

8. Verfahren zur Herstellung des Mittels gemäß den Ansprüchen 1 bis 7, dadurch gekennzeichnet, daß man das Copolymerisatwachs in Form einer Wachsdispersion, welche 5 bis 40 Gew.-% des Copolymerisatwachses enthält, auf den granulat- oder pelletförmigen, mit einem oder mehreren Pflanzenschutz-Wirkstoffen beaufschlagten Träger aufbringt.

9. Verfahren nach Anspruch 8, dadurch gekennzeichnet, daß man als Wachsdispersion eine wäßrige Suspension oder eine Wasser-Emulsion des Copolymerisatwachses verwendet.

10. Verfahren zur Bekämpfung von Pilzen, dadurch gekennzeichnet, daß man eine fungizid wirksame Menge eines Mittels gemäß den Ansprüchen 1 bis 7 im oder auf dem Ackerboden auf das im Ackerboden ausgebrachte Saatgut oder die sich daraus entwickelnden Pflanzen bzw. auf Sämlinge einwirken läßt.

## Claims

1. A composition, composed essentially of a granular or pelletized carrier, activated by one or more crop protection active compounds and a coating which for its part consists essentially of a copolymer wax which is composed of from 75 to 90% by weight of ethylene and from 10 to 25% by weight of an α-olefinically unsaturated mono- or dicarboxylic acid having 3 to 8 carbon atoms, the copolymer wax having an MFI of from 1 to 600, measured at 160°C and 325 p or 190°C and 2.16 kp load, and it being possible for the mono- or dicarboxylic acid to be present completely or partly in the form of salts with alkali metal ions, ammonium ions or identical or different alkanolammonium ions as cations.

2. A composition as claimed in claim 1, which as crop protection active compounds contains fungicidal crop protection active compounds.

3. A composition as claimed in claim 2, wherein the fungicidal crop protection active compounds are tridemorph and/or fenpropimorph and/or fenpropidine and a further fungicidal crop protection active compound.

4. A composition as claimed in claim 3, wherein the further crop protection active compound is an azole active compound.

5. A composition as claimed in claim 4, wherein the azole active compound is selected from the following group: prochloraz, epoxiconazole, hexaconazole, cyproconazole, difenoconazole, propiconazole, flusilazole, tebuconazole, diniconazole, triticonazole.

6. A composition as claimed in claims 1 to 5, wherein the granular or pelletized carrier is a fertilizer.

7. A composition as claimed in claim 6, wherein the fertilizer contains phosphate.

8. A method for preparing the composition as claimed in claims 1 to 7, wherein the copolymer wax is applied to the granular or pelletized carrier activated by one or more crop protection active compounds in the form of a wax dispersion, which contains from 5 to 40% by weight of the copolymer wax.

9. A method as claimed in claim 8, wherein the wax dispersion used is an aqueous suspension or a water emulsion of the copolymer wax.

10. A method of controlling fungi, which comprises allowing a fungicidally active amount of a composition as claimed in claims 1 to 7 to act in or on the soil on the seed planted in the soil or the plants developing therefrom or on seedlings.

## Revendications

1. Produit constitué essentiellement d'un véhicule imprégné d'une ou plusieurs substances actives phytosanitaires, à l'état de granulés ou de pellets, et d'un enrobage consistant lui-même essentiellement en une cire copolymère, laquelle a été préparée à partir de 75 à 90% en poids d'éthylène et de 10 à 25% en poids d'un acide mono-ou di-carboxylique à insaturation alpha-oléfinique en C3-C8, la cire de copolymère ayant une valeur MFI de 1 à 600, la mesure étant faite à 160° C sous une charge de 325 g ou à 190°C sous une charge de 2,16 kg, et l'acide mono- ou dicarboxilique peut être en totalité ou en partie à l'état de sel dont les cations sont des ions de métaux alcalins, des ions ammonium ou des ions alcanolammonium identiques ou différents.

2. Produit selon la revendication 1, caractérisé par le fait qu'il contient, en tant que substances actives phytosanitaires, des substances actives phytosanitaires fongicides.

3. Produit selon la revendication 2, caractérisé par le fait que les substances phytosanitaires fongicides sont du Tridemorph et/ou du Fenpropimorph et/ou du Fenpropidin, avec une autres substance active phytosanitaire fongicide.

4. Produit selon la revendication 3, caractérisé par le fait que l'autre substance active phytosanitaire est une substance active azolique.

5. Produit selon la revendication 4, caractérisé par le fait que la substance active azolique est choisie dans le groupe suivant : Prochloraz, Epoxiconazol, Hexaconazol, Cyproconazol, Difenoconazol, Propiconazol, Flusilazol, Tebuconazol, Diniconazol, Triticonazol.

6. Produit selon les revendications 1 à 5, caractérisé par le fait que le véhicule à l'état de granulés ou de pellets est un engrais.

7. Produit selon la revendication 6, caractérisé par le fait que l'engrais contient du phosphate.

8. Procédé de préparation du produit selon les revendications 1 à 7, caractérisé par le fait que l'on applique la cire de copolymère sous la forme d'une dispersion de cire contenant de 5 à 40% en poids de la cire de copolymère, sur le véhicule à l'état de granulés ou de pellets, imprégné d'une ou plusieurs substances actives phytosanitaires.

9. Procédé selon la revendication 8, caractérisé par le fait que l'on utilise, en tant que dispersions de cire, une suspension aqueuse ou une émulsion aqueuse de la cire de copolymère.

10. Procédé pour combattre les mycètes, caractérisé par le fait que l'on fait agir une quantité fongicide efficace d'un produit selon les revendications 1 à 7 dans ou sur le sol, sur les semences réparties dans le sol ou sur les pousses ou plantes développées à partir des semences.
